# EUROPÄISCHE PATENTSCHRIFT

(11) **EP 2 322 824 B1**
(45) Veröffentlichungstag und Bekanntmachung des Hinweises auf die Patenterteilung: **28.12.2011**
(21) Anmeldenummer: 10013663.9
(22) Anmeldetag: 14.10.2010
(51) Int. Cl.: F16H 57/04, F16H 25/20

(54) **Schmiereinheit für einen Gewindetrieb**
Lubricating unit for a screw-nut drive
Unité de lubrification pour un entraînement à vis et écrou

(30) Priorität: 13.11.2009 DE 102009053099
(43) Veröffentlichungstag der Anmeldung: 18.05.2011
(73) Patentinhaber: Robert Bosch GmbH, 70469 Stuttgart (DE)
(72) Erfinder: Ziegler, Andre, 97522 Sand Am Main (DE); Dietz, Paul, 97261 Güntersleben (DE)
(74) Vertreter: Maiß, Harald

(56) Entgegenhaltungen:
- DE-A1-102007 034 452
- US-A1- 2005 178 619
- US-A1- 2006 088 430
- US-A1- 2008 257 082
- US-B1- 6 220 110

## Beschreibung

Die Erfindung betrifft eine Schmiereinheit gemäß dem Oberbegriff von Anspruch 1.

Aus der gattungsgemäßen DE 10 2007 034 452 A1 ist eine solche Schmiereinheit bekannt. Gemäß der Fig. 3 der DE 10 2007 034 452 A1 ist die Schmiereinheit 10 zur Verwendung mit einem Gewindetrieb vorgesehen. Der Gewindetrieb umfasst eine Spindel 52, die sich in eine Längsrichtung erstreckt und die mit Gewindegängen 58 versehen ist, wobei die Spindel von einer Mutter 50 umgeben ist. Die Schmiereinheit umfasst ein hohlzylindrisches Gehäuse bestehend aus einem Grundkörper 14 und einem Deckel 18, der an einer Stirnseite des Grundkörpers angeordnet ist. An der dem Deckel gegenüberliegenden Stirnseite des Gehäuses sind Befestigungsmittel vorgesehen, mit denen die Schmiereinheit an der Mutter befestigt werden kann. Die Befestigungsmittel umfassen Schnapphaken 42 und eine Klemmmutter 46.

Der Deckel verschließt einen ringförmigen Hohlraum 16 im Inneren des Gehäuses. In dem Hohlraum ist eine Speicherplatte 12 aufgenommen, die in der Fig. 4 der DE 10 2007 034 452 A1 genauer dargestellt ist. Die Speicherplatte ist im Wesentlichen rechteckig ausgeführt, wobei sie mit einem umgebogenen Fortsatz 34 den Gewindegang der Spindel berühren kann. Die Speicherplatte besteht aus einem offenzelligen Schaumstoff, so dass sie Schmieröl aufsaugen und speichern kann. Zum beölen der Speicherplatte ist diese mit einer Vielzahl von Öleinfüllausnehmungen 38 versehen, welche die Speicherplatte durchsetzen. Beim Beölen wird zuerst der ringförmige Hohlraum des Gehäuses teilweise mit Schmieröl gefüllt. Anschließend wird die unbeölte Speicherplatte teilweise in das Gehäuse eingeschoben, wobei das Schmieröl in die Öleinfüllausnehmungen verdrängt wird. In der Folge saugt die Speicherplatte das Schmieröl auf, bis sie mit Schmieröl gesättigt ist. Hierbei ist anzumerken, dass dieser Vorgang einen längeren Zeitraum in Anspruch nimmt. Dies ist darauf zurückzuführen, dass die Porenstruktur des Schaumstoffes dahingehend optimiert ist, dass das Schmieröl vergleichsweise langsam abgegeben wird. Dies führt umgekehrt dazu, dass der Schaumstoff das Schmieröl nur langsam aufsaugt. Erst nachdem der Schaumstoff ganz mit Schmieröl getränkt ist, kann die Speicherplatte vollständig in den Hohlraum des Gehäuses eingeschoben werden, weil die Schmiereinheit mit einer größtmöglichen Schmierölmenge befüllt ist. Anschließend wird der Deckel mit dem Grundkörper fest verbunden.

Die Verbindung des Deckels mit dem Grundkörper muss möglichst flüssigkeitsdicht erfolgen, damit die Schmiereinheit im Betrieb nicht auslaufen kann. Als kostengünstige Verbindungen kommen hierbei insbesondere stoffschlüssig Verbindungsverfahren wie Schweißen oder Kleben in Betracht, da diese üblicherweise flüssigkeitsdicht ausgeführt werden können. Es hat sich gezeigt, dass die genannten Verfahren bei der mit Öl befüllten Schmiereinheit nicht angewandt werden können, da nicht sicher ausgeschlossen werden kann, dass die Verbindungsstelle mit Schmieröl benetzt ist, welches aus dem Hohlraum bzw. der Speicherplatte stammt. Ein Ölfilm verhindert jedoch eine stoffschlüssige Verbindung zwischen Grundkörper und Deckel. Bei der bekannten Schmiereinheit ist sogar damit zu rechnen, dass überhaupt keine feste Verbindung zwischen Deckel und Grundkörper zustande kommt.

Die Aufgabe der Erfindung besteht darin, eine Schmiereinheit anzugeben, bei welcher der Deckel zuverlässig und flüssigkeitsdicht mit dem Grundkörper verbunden werden kann. Zur Lösung der Aufgabe ist bei einer erfindungsgemäßen Schmiereinheit der Deckel mit dem Grundkörper stoffschlüssig verbunden, wobei in dem Gehäuse wenigstens eine Öleinfüllöffnung vorgesehen ist, die zur Öleinfüllausnehmung hin offen ist. Über die Öleinfüllöffnungen kann das Gehäuse mit Schmieröl befüllt werden, nachdem der Deckel mit dem Grundkörper stoffschlüssig verbunden, insbesondere verschweißt oder verklebt, wurde. Damit ist sicher ausgeschlossen, dass während des Fügevorgangs ein Ölfilm im Bereich der Verbindungsstelle vorhanden ist. Da die Öleinfüllöffnungen den Öleinfüllausnehmungen gegenüberliegen, kann das Schmieröl in einer kurzen Zeitspanne in die Öleinfilllausnehmungen eingefüllt werden. Während den unvermeidbaren Lagerzeiten wird dieses Schmieröl von der Speicherplatte langsam aufgesaugt, ohne dass hierfür ein besonderer Aufwand betrieben werden muss. Hierbei ist anzumerken, dass es nicht möglich ist, dass Schmieröl, beispielsweise mittels einer medizinischen Spritze, direkt in die Speicherplatte einzuspritzen. Aufgrund der sehr langsam ablaufenden Öldiffusion würde dieser Vorgang einen derart langen Zeitraum in Anspruch nehmen, dass die Schmiereinheit nicht wirtschaftlich hergestellt werden könnte.

Bei einer bevorzugten Schmiereinheit ist die Öleinfüllöffnung im Deckel vorgesehen, wobei die Öleinfüllausnehmung zu dem dem Deckel zugewandten Rand der Speicherplatte hin offen ist. Höchst vorzugsweise sind der Grundkörper und der Deckel aus Kunststoff spritzgegossen. Die vorgeschlagene Öleinfüllöffnung lässt sich erheblich einfacher im Deckel als im Grundkörper herstellen, da das betreffende Spritzgusswerkzeug sehr viel einfacher aufgebaut ist. Insbesondere ist im Spritzgusswerkzeug des Deckels kein zusätzlicher Schieber für die Öleinfüllöffnung erforderlich. Darüber hinaus können die stirnseitigen Öleinfüllöffnungen im Deckel mit einer ohnehin erforderlichen Längsdichtung verschlossen werden, so dass kein Schmieröl über die Öleinfüllöffnung entweichen kann.

Bei einer bevorzugten Schmiereinheit ist die Öleinfüllausnehmung im Wesentlichen T-förmig ausgebildet. Durch die T-Form wird einerseits eine Öleinfüllausnehmung mit einem großen Volumen bereit gestellt. Gleichzeitig ist die Öleinfüllausnehmung im Bereich der Öleinfüllöffnung sehr schmal ausgebildet, so dass an der Öleinfüllöffnung nur eine geringe Flüssigkeitsmenge unmittelbar ansteht. Demnach ist nicht zu befürchten, dass durch die Öleinfüllöffhung eine nennenswerte Schmierölmenge aus der Schmiereinheit entweicht. Darüber hinaus ist die Begrenzungsfläche der T-förmigen Öleinfüllausnehmung an der Speicherplatte besonders groß, so dass das Aufsaugen des Schmieröls in die Speicherplatte vergleichsweise schnell vonstatten geht.

Bei einer bevorzugten Schmiereinheit ist die Speicherplatte im Wesentlichen rechteckig ausgeführt, wobei die Speicherplatte einen langgestreckten Fortsatz aufweist, der mit gegenüber dem verbleibenden Rest der Speicherplatte unveränderter Dicke über den Umriss der Speicherplatte übersteht, wobei der langgestreckte Fortsatz um etwa 90° umgebogen ist, so dass er einen Gewindegang der Spindel berühren kann. Eine derartige Speicherplatte kann problemlos mittels Wasserstrahlschneiden aus einer vorgefertigten Schaumstoffplatte ausgeschnitten werden, ohne dass es einer besonderen Nachbearbeitung bedarf. Durch die langgestreckte Form kann der Fortsatz problemlos umgebogen werden, ohne dass es notwendig ist, seine Dicke gegenüber der Dicke der Speicherplatte zu reduzieren. Aufgrund der Berührung zwischen dem Fortsatz und der Spindel kann Schmiermittel, das im Schaumstoff gespeichert ist, auf die Spindel übertragen werden. Für diesen Zweck hat sich ein offenzelliger Schaumstoff aus Polyurethan bewährt.

Bei einer weiter bevorzugten Schmiereinheit ist die Speicherplatte von wenigstens einem Schlitz durchsetzt, der in Verlängerung des langgestreckten Fortsatzes angeordnet ist, wobei die Biegung des Fortsatzes im Bereich des Schlitzes angeordnet ist. Durch diese Maßnahme wird der Verschnitt beim Ausschneiden der Speicherplatte aus einer Schaumstoffplatte minimiert, da der Überstand des langgestreckten Fortsatzes über den rechteckigen Umriss der Speicherplatte klein ausgeführt werden kann. Das Maß des genannten Überstands bestimmt die Größe der nicht nutzbaren Fläche der Schaumstoffplatte. Die langgestreckte Form des Fortsatzes wird dementsprechend durch die Länge des Schlitzes und die Größe des Überstandes definiert. Die Biegung des Fortsatzes liegt prinzipbedingt im Fußbereich des Fortsatzes, also in dem Bereich, in dem auch der Schlitz angeordnet ist. Der genannte Schlitz kann grundsätzlich eine beliebig große Breite aufweisen, um seine Funktion zu erfüllen. Gleichwohl wird eine möglichst verschwindend geringe Breite des Schlitzes angestrebt, damit das Speichervolumen der Speicherplatte möglichst groß ist.

Bei einer bevorzugten Schmiereinheit umfassen die Befestigungsmittel ein Außengewinde am Gehäuse, auf dem eine Klemmmutter mit einem Innengewinde aufgeschraubt ist, wobei an dem Gehäuse eine Rastnase vorgesehen ist, die in eine Vielzahl von Vertiefungen eingreifen kann, welche an der Klemmmutter vorgesehen sind. Durch den rastenden Eingriff der Rastnase in die Vertiefungen soll verhindert werden, dass sich die Klemmmutter unbeabsichtigt gegenüber dem Außengewinde verdreht. Hierdurch würde sich die Schmiereinheit von der Mutter lösen. Die vorgeschlagene Verdrehsicherung, kann auf einfache Weise im Kunststoffspritzgussverfahren hergestellt werden.

Bei einer weiter bevorzugten Schmiereinheit sind die Vertiefungen langgestreckt ausgeführt und in Längsrichtung ausgerichtet, wobei sie das Innengewinde der Klemmmutter schneiden. Die Verdrehsicherung der Klemmmutter ist damit besonders platzsparend. Bei dem Außengewinde handelt es sich vorzugsweise um ein Feingewinde, damit die Vertiefungen den Gewindeeingriff möglichst wenig stören. Anzumerken ist, dass bei dieser Ausführungsform die Rastnase im Bereich des Außengewindes am Gehäuse angeordnet ist, damit sie in die Vertiefungen eingreifen kann.

Bei einer bevorzugten Schmiereinheit umfassen die Befestigungsmittel eine Vielzahl von Haken, die in einen Ring eingreifen, der mit einer Unterbrechung versehen ist, wobei im Bereich der Unterbrechung ein Verschlusskörper derart angeordnet ist, dass die Breite der Unterbrechung in Umfangsrichtung des Ringes im Wesentlichen nicht verringert werden kann. Die Befestigung einer Schmiereinheit an einer Mutter mittels einer Vielzahl von Haken, die in einen unterbrochenen Ring eingreifen ist aus der DE 10 2006 033 852 A1 bekannt. Die genannte Unterbrechung ist notwendig, damit der Ring in die im Wesentlichen starre Mutter eingeschnappt werden kann. Der Nachteil des bekannten Ringes besteht darin, dass sich die Schnappverbindung zwischen Ring und Mutter lösen kann, wenn die Klemmmutter mit einem zu großen Drehmoment festgedreht wird. Dieses Problem wird durch den Verschlusskörper vermieden, da dieser einer Verminderung des Durchmessers des Ringes entgegen wirkt.

Bei dem Verschlusskörper handelt es sich vorzugsweise um eine Kugel, da diese besonders einfach in der Unterbrechung verklemmt werden kann.

Bei einer besonders bevorzugten Schmiereinheit ist der Ring mit einem radialen Fortsatz versehen, der in eine angepasste Ausnehmung an der Mutter eingreifen kann.

Durch den radialen Fortsatz soll eine Verdrehung des Ringes gegenüber der Mutter vermieden werden. Diese Ausführungsform ist besonders vorteilhaft in Verbindung mit dem obigen Verschlusskörper, da der Verschlusskörper auch bewirkt, dass der radiale Fortsatz außer Eingriff mit der zugeordneten Ausnehmung gerät.

Die Erfindung wird im Folgenden anhand der beigefügten Zeichnungen näher erläutert. Es stellt dar:
- Fig. 1: eine perspektivische Explosionsansicht eines Gewindetriebs mit einer erfindungsgemäßen Schmiereinheit;
- Fig. 2: eine perspektivische Ansicht der ungebogenen Speicherplatte der Schmiereinheit gemäß Fig. 1;
- Fig. 3: eine perspektivische Explosionsansicht einer zweiten Ausführungsform des Gehäuses und der Klemmmutter; und
- Fig. 4: eine Vorderansicht des Ringes mit dem Verschlusskörper.

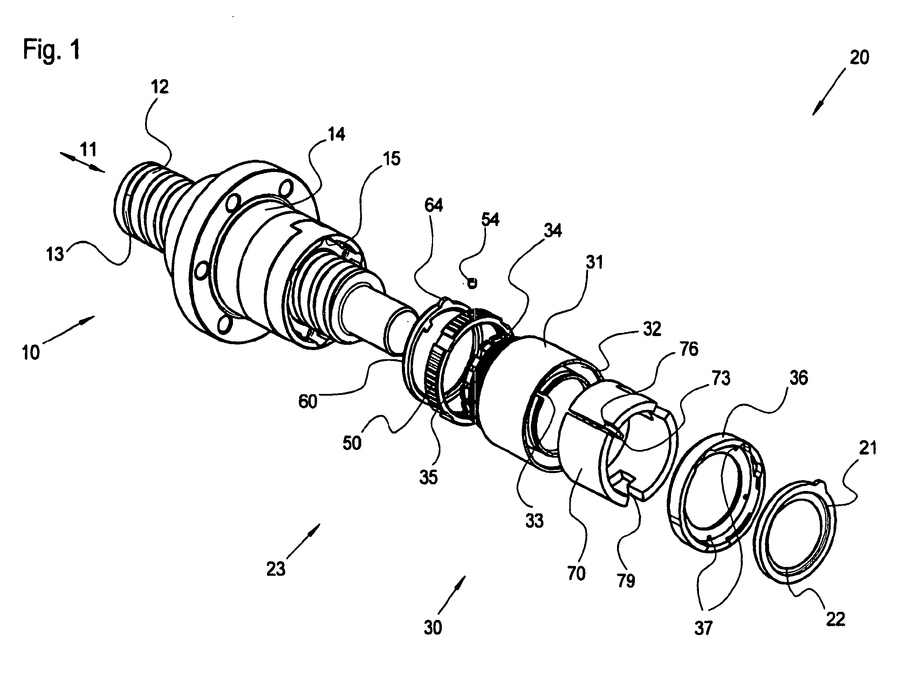

Fig. 1 zeigt einen Gewindetrieb 10 mit einer erfindungsgemäßen Schmiereinheit 20. Der Gewindetrieb 10 umfasst eine sich in eine Längsrichtung 11 erstreckende Spindel 12, die mit einem schraubenförmigen Gewindegang 13 versehen ist. Um die Spindel 12 herum ist eine Mutter 14, namentlich eine Kugelumlaufmutter, angeordnet, die in Schraubeingriff mit der Spindel 12 steht. An der in Fig. 1 vorderen Längsstimseite der Mutter 14 ist die Schmiereinheit 20 angebracht.

Die Schmiereinheit 20 umfasst ein Gehäuse 30 bestehend aus einem Grundkörper 31 und einem Deckel 36, die beide aus Kunststoff im Spritzgussverfahren hergestellt sind. Der Grundkörper 31 ist im Wesentlichen hohlzylindrisch ausgeführt. Im Inneren des Grundkörpers 31 ist ein kreisringförmiger Hohlraum 32 vorgesehen, der zur vorderen Längsstimseite des Grundkörpers 31 hin offen ist. In dem Hohlraum 32 ist eine Speicherplatte 70 angeordnet, die ausgehend von einer ebenen Platte zu einem Kreisring gebogen ist. Mit dem Deckel 36 an der vorderen Längsstimseite des Grundkörpers 31 wird der Hohlraum 32 im Wesentlichen vollständig verschlossen. Der Deckel 36 wird hierbei mittels Ultraschallschweißen stoffschlüssig mit dem Grundkörper 31 verbunden.

An dem Deckel 36 sind mehrere Öleinfüllöffnungen 37 vorgesehen, über die Schmieröl, beispielsweise mittels einer Kanüle, in den Hohlraum 32 des Grundkörpers 31 eingefüllt werden kann. Nachdem das Schmieröl in den Hohlraum 32 eingefüllt wurde, werden die Öleinfüllöffungen 37 mit der gesonderten Dichtung 21 abgedeckt, so dass kein Schmiermittel über die Öleinfulllöffnungen 37 aus dem Gehäuse 30 austreten kann. Die Dichtung 21 ist mit einer Dichtlippe 22 versehen, die an der Spindel 12 anliegt, so dass keine Fremdkörper in das Innere des Gewindetriebs 10 eindringen können, wobei gleichzeitig der Schmierstoff im Inneren des Gewindetriebs 10 nicht aus diesem austreten kann.

An der Innenumfangsfläche des Grundkörpers 31 ist eine Ölaustrittsöffnung 33 vorgesehen, über die eine Verbindung zwischen dem Hohlraum 32 und der Spindel 12 besteht. Durch diese Ölaustrittsöffnung 33 wird ein langgestreckter Fortsatz 73 der Speicherplatte 70 geführt, so dass dieser den Gewindegang 13 der Spindel 12 berührt. Der langgestreckte Fortsatz 73 ist einstückig mit der Speicherplatte 70 ausgeführt und um etwa 90° umgebogen. Die Speicherplatte 70 besteht aus einem offenzelligen Schaumstoff, namentlich Polyurethan, so dass der langgestreckte Fortsatz 73 ausreichend flexibel ist, um die genannte Biegung zu ermöglichen.

Das Schmieröl, das über die Öleinfüllöffnungen 37 in den Hohlraum 32 eingefüllt wurde, wird von der Speicherplatte 70 aufgesaugt und über den langgestreckten Fortsatz 73 auf den Gewindegang 13 der Spindel 12 aufgetragen, so dass der Gewindetrieb 10 ausreichend geschmiert ist. Dabei ist beabsichtigt, dass der Ölvorrat in der Schmiereinheit 20 für die gesamte Lebensdauer des Gewindetriebs 10 ausreicht. Folglich muss die Schmierölabgabe an den Gewindegang 13 besonders langsam erfolgen. Die entsprechende Abgaberate wird maßgeblich durch die Eigenschaften, beispielsweise die Porengröße, des Schaumstoffs beeinflusst. Die geringe Schmierölabgaberate bedingt auch, dass das Schmieröl, welches über die Öleinfüllöffnungen 37 in den Hohlraum 32 eingefüllt wird, nur sehr langsam von der Speicherplatte 70 aufgesaugt wird. Damit der Öleinfüllvorgang während einer kurzen Zeitdauer stattfinden kann, sind in der Speicherplatte 70 Öleinfüllausnehmungen 79 vorgesehen, die zu den Öleinfüllausnehmungen 37 hin offen sind. Dementsprechend wird dass Schmieröl über die Öleinfüllöffnungen 37 in den durch die Öleinfüllausnehmungen 79 geschaffenen Freiraum eingefüllt, was während eines kurzen Zeitraums geschehen kann. Von dort wird das Schmieröl von der Speicherplatte 70 aufgesaugt, bis diese vollständig mit Schmieröl gesättigt ist. Dieser Vorgang kann ohne weiteres während der unvermeidbaren Lagerzeit im Produktionsprozess geschehen, so dass hierdurch keine Zusatzkosten entstehen. Nachdem die Speicherplatte 70 die gesamte Schmierölmenge aus den Öleinfüllausnehmungen 79 aufgesaugt hat, kann ein weiteres mal Schmieröl in die Öleinfüllausnehmungen 79 eingefüllt werden, damit die Schmiereinheit 20 mit der maximal möglichen Schmierölmenge gefüllt ist. Das Volumen der Öleinfüllausnehmungen 79 ist dabei so auf das Volumen der Speicherplatte 70 abgestimmt, dass sich bei zweimaliger Befüllung der Schmiereinheit 20 die maximale gespeicherte Schmierölmenge ergibt.

An der dem Deckel 36 gegenüberliegenden hinteren Längsstimseite des Gehäuses 30 sind Befestigungsmittel 23 vorgesehen, mit denen das Gehäuse 30 an der Mutter 14 befestigt werden kann. Die Befestigungsmittel 23 sind gemäß der DE 10 2006 033 852 A1 ausgeführt. Die Befestigungsmittel 23 umfassen einen geschlitzten Ring 60, der in die Mutter 14 eingeschnappt wird. An dem Ring 60 ist ein radialer Fortsatz 64 vorgesehen, der in eine angepasste Ausnehmung 15 an der Mutter 14 eingreift, so dass der Ring 60 nicht gegenüber der Mutter 14 verdreht werden kann. Am Innenumfang des Ringes 60 greift eine Vielzahl von Haken 35 ein, die einstückig mit dem Grundkörper 31 des Gehäuses 30 ausgebildet sind. Über die Klemmmutter 50, die auf den Grundkörper 31 aufgeschraubt ist, wird der Grundkörper 31 mit der Mutter 14 verklemmt. Die Drehstellung der Klemmmutter 50 wird mit einem Gewindestift 54 gesichert.

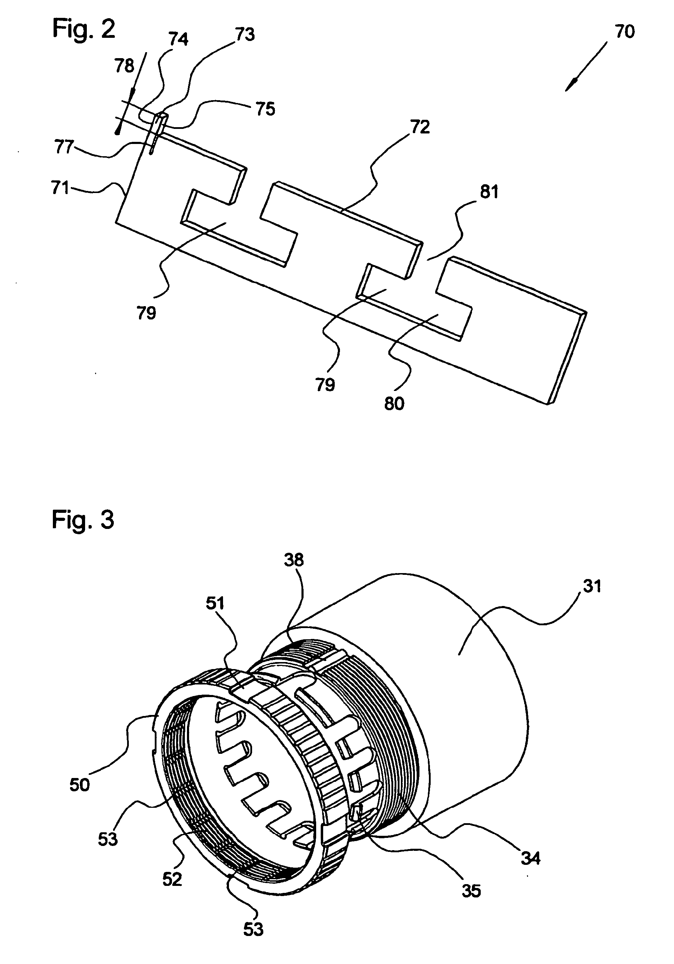

Fig. 2 zeigt die Speicherplatte 70 im ungebogenen, ebenen Zustand. In diesem Zustand wird die Speicherplatte 70 mittels Wasserstrahlschneiden aus einer ebenen Schaumstoffplatte ausgeschnitten, wobei die Speicherplatte nach dem Wasserstrahlschneiden ohne weitere Nachbearbeitung in den Hohlraum (Nr. 32 in Fig. 1) des Gehäuses eingesetzt werden kann. Die Speicherplatte 70 besitzt einen im Wesentlichen rechteckigen Umriss. An einer Ecke der Speicherplatte 70 ist ein langgestreckter Fortsatz 73 vorgesehen, der sich parallel zur Längsrichtung (Nr. 11 in Fig. 1) der Spindel erstreckt. Die erste Seitenfläche 74 des langgestreckten Fortsatzes 73 ist in Verlängerung der einen kurzen Seitenfläche 71 der Speicherplatte 70 angeordnet und bildet mit dieser eine ebene, rechteckige Fläche. Der langgestreckte Fortsatz 73 weist einen Überstand 78 über den Umriss der Speicherplatte 70 auf. Darüber hinaus wird er durch einen Schlitz 77 begrenzt, der in Verlängerung der zweiten Seitenfläche 75 des Fortsatzes 73 angeordnet ist, wobei die zweite Seitenfläche 75 des Fortsatzes 73 der ersten Seitenfläche 74 parallel gegenüber liegt. Die Biegung (Nr. 76 in Fig. 1) des langgestreckten Fortsatzes 73 ist im Bereich des Schlitzes angeordnet.

An der langen Seitenfläche 72 der Speicherplatte 70, die dem langgestreckten Fortsatz 73 zugeordnet ist, sind insgesamt zwei identische Öleinfüllausnehmungen 79 vorgesehen. Die Öleinfüllausnehmungen 79 sind T-förmig ausgeführt mit einem schmalen Bereich 81, der den Öleinfüllöffnungen (Nr. 37 in Fig. 1) gegenüberliegt und einem breiten Bereich 80, der den größten Teil des Ölspeichervolumens bereitstellt.

Fig. 3 zeigt eine zweite Ausführungsforin des Grundkörpers 31 des Gehäuses 30 und der Klemmmutter 50, wobei gegenüber der ersten Ausführungsform ausschließlich die Verdrehsicherung der Klemmmutter 50 modifiziert ist. Im Bereich des Außengewindes 34 am Grundkörper 31 ist eine Rastnase 38 vorgesehen, welche um einen geringen Betrag über die Gewindegänge des Außengewindes 34 übersteht. Das als Feingewinde ausgeführte Außengewinde 34 ist im Bereich der Rastnase 38 unterbrochen. Am Innengewinde 52 der Klemmmutter 50 ist eine Vielzahl von Vertiefungen 53 vorgesehen, die sich jeweils parallel zur Rastnase 38 erstrecken, so dass die Rastnase in die Vertiefungen 53 einrasten kann. Die Höhe der Rastnase ist so ausgewählt, dass das Innengewinde 52 an der Klemmmutter 50 nicht beschädigt wird, wenn diese auf das zugeordnete Außengewinde 34 aufgeschraubt wird. Hierbei wird insbesondere die große Elastizität des Kunststoffmaterials ausgenutzt, aus dem der Grundkörper 31 und die Klemmmutter 50 bestehen. Durch die Verrastung wird verhindert, dass sich die Klemmmutter 50 unbeabsichtigt löst. Hinzuweisen ist noch auf die Nuten 51 an der Außenumfangsfläche der Klemmmutter 50, welche zum Eingriff mit einem Schraubwerkzeug, insbesondere einem Hakenschlüssel, bestimmt sind.

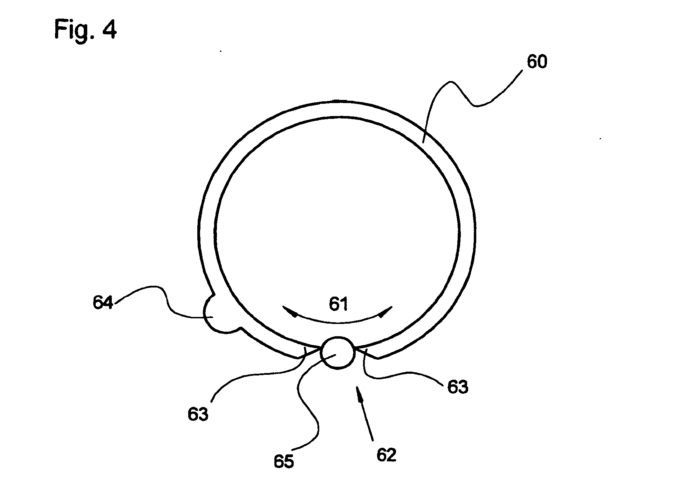

Fig. 4 zeigt den Ring 60, der mit einer Unterbrechung 62 versehen ist. Die Unterbrechung 62 bewirkt, dass der Ring 60 nach radial innen elastisch zusammengedrückt und damit in die Mutter 14 eingeschnappt werden kann. Um ein unbeabsichtigtes Zusammendrücken des Ringes 60 zu verhindern, ist in die Unterbrechung 62 ein Verschlusskörper 65 in Form einer Stahlkugel unter Vorspannung eingesetzt. Die Enden 63 des Ringes sind schräg ausgeführt und laufen im Wesentlichen spitz zu, so dass die Kugel hinter die Spitzen schnappen kann und dort gehalten wird.

### Bezugszeichenliste

- 10: Gewindetrieb
- 11: Längsrichtung
- 12: Spindel
- 13: Gewindegang
- 14: Mutter
- 15: Ausnehmung

- 20: Schmiereinheit
- 21: Dichtung
- 22: Dichtlippe
- 23: Befestigungsmittel

- 30: Gehäuse
- 31: Grundkörper
- 32: Hohlraum
- 33: Ölaustrittsöffnung
- 34: Außengewinde
- 35: Haken
- 36: Deckel
- 37: Öleinfüllöffnung
- 38: Rastnase

- 50: Klemmmutter
- 51: Nut
- 52: Innengewinde
- 53: Vertiefung
- 54: Gewindestift

- 60: Ring
- 61: Umfangsrichtung
- 62: Unterbrechung
- 63: Ende
- 64: radialer Fortsatz
- 65: Verschlusskörper

- 70: Speicherplatte
- 71: kurze Seitenfläche
- 72: lange Seitenfläche
- 73: langgestreckter Fortsatz
- 74: erste Seitenfläche
- 75: zweite Seitenfläche
- 76: Biegung
- 77: Schlitz
- 78: Überstand
- 79: Öleinfüllausnehmung
- 80: breiter Bereich
- 81: schmaler Bereich

## Patentansprüche

1. Schmiereinheit (20) zur Verwendung mit einem Gewindetrieb (10), bestehend aus einer sich in eine Längsrichtung (11) erstreckenden Spindel (12) und einer die Spindel (12) umgebenden Mutter (14), wobei die Schmiereinheit (20) ein hohlzylindrisches Gehäuse (30) umfasst, welches einen Grundkörper (31) mit einem ringförmigen Hohlraum (32) aufweist, der von einem gesonderten Deckel (36) stirnseitig verschlossen ist, wobei in dem Hohlraum (32) eine Speicherplatte (70) aus Schaumstoff aufgenommen ist, die zu einem Ring gebogen ist, wobei die Speicherplatte (70) von wenigstens einer Öleinfüllausnehmung (79) durchsetzt ist, wobei an der dem Deckel (36) gegenüberliegenden Längsstirnseite des Gehäuses (30) Befestigungsmittel (23) vorgesehen sind, mit denen das Gehäuse (30) an der Mutter (14) befestigt werden kann,
**dadurch gekennzeichnet, dass** der Deckel (36) mit dem Grundkörper (31) stoffschlüssig verbunden ist, wobei in dem Gehäuse (30) wenigstens eine Öleinfüllöffnung (37) vorgesehen ist, die zur Öleinfüllausnehmung (79) hin offen ist.

2. Schmiereinheit nach Anspruch 1,
**dadurch gekennzeichnet, dass** die Öleinfüllöffnung (37) im Deckel (36) vorgesehen ist, wobei die Öleinfüllausnehmung (79) zu dem dem Deckel zugewandten Rand (72) der Speicherplatte (70) hin offen ist.

3. Schmiereinheit nach einem der vorstehenden Ansprüche,
**dadurch gekennzeichnet, dass** die Öleinfüllausnehmung (79) im Wesentlichen T-förmig ausgebildet ist.

4. Schmiereinheit nach einem der vorstehenden Ansprüche,
**dadurch gekennzeichnet, dass** die Speicherplatte (70) im ungebogenen Zustand im Wesentlichen rechteckig ausgeführt ist, wobei die Speicherplatte (70) einen langgestreckten Fortsatz (73) aufweist, der mit gegenüber dem verbleibenden Rest der Speicherplatte (70) unveränderter Dicke über den Umriss der Speicherplatte (70) übersteht, wobei der langgestreckte Fortsatz um etwa 90° umgebogen ist, so dass er einen Gewindegang (13) der Spindel (12) berühren kann.

5. Schmiereinheit nach Anspruch 4,
**dadurch gekennzeichnet, dass** die Speicherplatte (70) von wenigstens einem Schlitz (77) durchsetzt ist, der in Verlängerung des langgestreckten Fortsatzes (72) angeordnet ist, wobei die Biegung (76) des Fortsatzes (73) im Bereich des Schlitzes (77) angeordnet ist.

6. Schmiereinheit nach einem der vorstehenden Ansprüche,
**dadurch gekennzeichnet, dass** die Befestigungsmittel (23) ein Außengewinde (34) am Gehäuse (30) umfassen, auf dem eine Klemmmutter (50) mit einem Innengewinde (52) aufgeschraubt ist, wobei an dem Gehäuse (30) eine Rastnase (38) vorgesehen ist, die in eine Vielzahl von Vertiefungen (53) eingreifen kann, welche an der Klemmmutter (50) vorgesehen sind.

7. Schmiereinheit nach Anspruch 6,
**dadurch gekennzeichnet, dass** die Vertiefungen (53) langgestreckt ausgeführt und in Längsrichtung (11) ausgerichtet sind, wobei sie das Innengewinde (52) der Klemmmutter (50) schneiden.

8. Schmiereinheit nach einem der vorstehenden Ansprüche,
**dadurch gekennzeichnet, dass** die Befestigungsmittel (23) eine Vielzahl von Haken (35) umfassen, die in einen Ring (60) eingreifen, der mit einer Unterbrechung (62) versehen ist, wobei im Bereich der Unterbrechung (62) ein Verschlusskörper (65) derart angeordnet ist, dass die Breite der Unterbrechung (62) in Umfangsrichtung (61) des Ringes (60) im Wesentlichen nicht verringert werden kann.

9. Schmiereinheit nach Anspruch 8,
**dadurch gekennzeichnet, dass** der Verschlusskörper (65) eine Kugel ist.

10. Schmiereinheit nach Anspruch 8 oder 9,
**dadurch gekennzeichnet, dass** der Ring (60) mit einem radialen Fortsatz (64) versehen ist, der in eine angepasste Ausnehmung (15) an der Mutter (14) eingreifen kann.

## Claims

1. Lubricating unit (20) for use with a screw drive (10), consisting of a spindle (12) which extends in a longitudinal direction (11) and a nut (14) which surrounds the spindle (12), the lubricating unit (20) comprising a hollow-cylindrical housing (30) which has a basic body (31) with an annular cavity (32) which is closed on the end side by a separate cover (36), a storage plate (70) which is made from foam and is bent to form a ring being received in the cavity (32), the storage plate (70) being penetrated by at least one oil filling recess (79), fastening means (23) being provided on that longitudinal end side of the housing (30) which lies opposite the cover (36), by way of which fastening means (23) the housing (30) can be fastened to the nut (14), **characterized in that** the cover (36) is connected to the basic body (31) with a material-to-material fit, at least one oil filling opening (37) which is open towards the oil filling recess (79) being provided in the housing (30).

2. Lubricating unit according to Claim 1, **characterized in that** the oil filling opening (37) is provided in the cover (36), the oil filling recess (79) being open towards that edge (72) of the storage plate (70) which faces the cover.

3. Lubricating unit according to one of the preceding claims, **characterized in that** the oil filling recess (79) is of substantially T-shaped configuration.

4. Lubricating unit according to one of the preceding claims, **characterized in that** the storage plate (70) is of substantially rectangular configuration in the unbent state, the storage plate (70) having an elongate projection (73) which protrudes beyond the outline of the storage plate (70) with an unchanged thickness in comparison with the remaining rest of the storage plate (70), the elongate projection being bent over by approximately 90°, with the result that it can touch a thread (13) of the spindle (12).

5. Lubricating unit according to Claim 4, **characterized in that** the storage plate (70) is penetrated by at least one slot (77) which is arranged in extension of the elongate projection (72), the bend (76) of the projection (73) being arranged in the region of the slot (77).

6. Lubricating unit according to one of the preceding claims, **characterized in that** the fastening means (23) comprise an external thread (34) on the housing (30), on which external thread (34) a clamping nut (50) is screwed with an internal thread (52), a latching lug (38) being provided on the housing (30), which latching lug (38) can engage into a multiplicity of depressions (53) which are provided on the clamping nut (50).

7. Lubricating unit according to Claim 6, **characterized in that** the depressions (53) are of elongate configuration and are oriented in the longitudinal direction (11), the said depressions (53) intersecting the internal thread (52) of the clamping nut (50).

8. Lubricating unit according to one of the preceding claims, **characterized in that** the fastening means (23) comprise a multiplicity of hooks (35) which engage into a ring (60) which is provided with an interruption (62), a closure body (65) being arranged in the region of the interruption (62) in such a way that the width of the interruption (62) substantially cannot be reduced in the circumferential direction (61) of the ring (60).

9. Lubricating unit according to Claim 8, **characterized in that** the closure body (65) is a ball.

10. Lubricating unit according to Claim 8 or 9, **characterized in that** the ring (60) is provided with a radial projection (64) which can engage into an adapted recess (15) on the nut (14).

## Revendications

1. Unité de lubrification (20) pour l'utilisation avec un entraînement à vis et écrou (10), constitué d'une vis (12) s'étendant dans la direction longitudinale (11) et d'un écrou (14) encourant la vis (12), l'unité de lubrification (20) comprenant un boîtier cylindrique creux (30), qui présente un corps de base (31) avec une cavité annulaire (32), qui est fermée du côté frontal par un couvercle séparé (36), une plaque de stockage (70) en mousse étant reçue dans la cavité (32), laquelle étant recourbée en forme de bague, la plaque de stockage (70) étant traversée par au moins un orifice de remplissage d'huile (79), des moyens de fixation (23) étant prévus sur le côté frontal longitudinal opposé au couvercle (36) du boîtier (30), lesquels moyens de fixation permettant de fixer le boîtier (30) sur l'écrou (14),
**caractérisée en ce que** le couvercle (36) est connecté par engagement par liaison de matière au corps de base (31), au moins une ouverture de remplissage d'huile (37) étant prévue dans le boîtier (30), laquelle est ouverte vers l'orifice de remplissage d'huile (79).

2. Unité de lubrification selon la revendication 1, **caractérisée en ce que** l'ouverture de remplissage d'huile (37) est prévue dans le couvercle (36), l'orifice de remplissage d'huile (79) étant ouvert vers le bord (72) de la plaque de stockage (70) tourné vers le couvercle.

3. Unité de lubrification selon l'une quelconque des revendications précédentes,
**caractérisée en ce que** l'orifice de remplissage d'huile (79) est réalisé sensiblement en forme de T.

4. Unité de lubrification selon l'une quelconque des revendications précédentes,
**caractérisée en ce que** la plaque de stockage (70) est réalisée dans l'état non recourbé de manière sensiblement rectangulaire, la plaque de stockage (70) présentant une saillie allongée (73) qui dépasse du pourtour de la plaque de stockage (70) avec une épaisseur non modifiée par rapport au reste de la plaque de stockage (70), la saillie allongée étant recourbée d'environ 90° de sorte qu'elle puisse venir en contact avec un pas de filetage (13) de la vis (12).

5. Unité de lubrification selon la revendication 4,
**caractérisée en ce que** la plaque de stockage (70) est traversée par au moins une fente (77) qui est disposée dans le prolongement de la saillie allongée (72), le cintrage (76) de la saillie (73) étant disposé dans la région de la fente (77).

6. Unité de lubrification selon l'une quelconque des revendications précédentes,
**caractérisée en ce que** les moyens de fixation (23) comprennent un filetage extérieur (34) sur le boîtier (30), sur lequel est vissé un écrou de serrage (50) avec un filetage intérieur (52), un nez d'encliquetage (38) étant prévu sur le boîtier (30), lequel peut venir en prise dans une pluralité de renfoncements (53) qui sont prévus sur l'écrou de serrage (50).

7. Unité de lubrification selon la revendication 6,
**caractérisée en ce que** les renfoncements (53) sont réalisés de manière étirée en longueur et sont orientés dans la direction longitudinale (11), en coupant le filetage intérieur (52) de l'écrou de serrage (50).

8. Unité de lubrification selon l'une quelconque des revendications précédentes,
**caractérisée en ce que** les moyens de fixation (23) comprennent une pluralité de crochets (35), qui viennent en prise dans une bague (60), qui est pourvue d'un perçage (62), un corps de fermeture (65) étant disposé dans la région du perçage (62) de telle sorte que la largeur du perçage (62) dans la direction périphérique (61) de la bague (60) ne puisse pas être sensiblement réduite.

9. Unité de lubrification selon la revendication 8,
**caractérisée en ce que** le corps de fermeture (65) est une bille.

10. Unité de lubrification selon la revendication 8 ou 9,
**caractérisée en ce que** la bague (60) est pourvue d'une saillie radiale (64), qui peut venir en prise dans un évidement adapté (15) sur l'écrou (14).
